(19) Europäisches Patentamt
European Patent Office
Office européen des brevets

(11) **EP 2 721 308 B1**

(12) **FASCICULE DE BREVET EUROPEEN**

(45) Date de publication et mention
de la délivrance du brevet:
**13.04.2016 Bulletin 2016/15**

(21) Numéro de dépôt: **12738609.2**

(22) Date de dépôt: **20.06.2012**

(51) Int Cl.:
*F15B 19/00* *(2006.01)*     *B64F 5/00* *(2006.01)*

(86) Numéro de dépôt international:
**PCT/IB2012/053110**

(87) Numéro de publication internationale:
**WO 2012/176132 (27.12.2012 Gazette 2012/52)**

(54) **BANC D'ALIMENTATION FLUIDIQUE, PAR EXEMPLE POUR UN AÉRONEF EN PHASE DE MAINTENANCE**

HYDRAULISCHER PRÜFSTAND, Z.B FÜR EIN FLUGZEUG IN WARTUNGSPHASE

HYDRAULIC SUPPLY BENCH, FOR EXAMPLE FOR AN AIRCRAFT IN MAINTENANCE PHASE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.06.2011 FR 1155408**

(43) Date de publication de la demande:
**23.04.2014 Bulletin 2014/17**

(73) Titulaire: **Appareillages et Bancs Hydrauliques
Chatelleraudais
86100 Chatellerault (FR)**

(72) Inventeur: **RICHARD, Christian
F-86100 Chatellerault (FR)**

(74) Mandataire: **Gevers & Orès
36 rue de Saint-Pétersbourg
75008 Paris (FR)**

(56) Documents cités:
**DE-A1- 19 709 475     GB-A- 1 500 133
US-A- 5 337 262**

**Description**

L'invention concerne un banc d'alimentation en fluide.

L'invention concerne plus particulièrement un banc d'alimentation en fluide pour un aéronef en phase de maintenance.

Un aéronef, par exemple un avion ou un hélicoptère, comporte différents circuits fluidiques pour alimenter certains systèmes de l'aéronef, tels que les commandes de gouverne ou le train d'atterrissage.

Lorsque l'aéronef est en fonctionnement, la pression dans ces circuits est maintenue constante par les pompes entraînées par le(s) moteur(s) de l'avion, que ces systèmes soient sollicités ou non.

Cependant, lorsque l'aéronef est immobilisé pour maintenance, le plus souvent dans un hangar, il est difficilement envisageable de laisser le(s) moteur(s) tourner pour différentes raisons dont des questions de sécurité du personnel de maintenance.

Ainsi, en phase de maintenance, on utilise un banc d'alimentation en fluide pour les différents circuits de l'aéronef, afin de vérifier le bon fonctionnement des systèmes de l'aéronef utilisant un circuit fluidique. Un tel banc, généralement mobile, permet alors, en phase de maintenance, d'alimenter l'aéronef avec un fluide à une pression identique aux pressions de fonctionnement des circuits concernés de l'aéronef lorsque ce dernier est en fonctionnement.

L'aéronef comprend des prises de coques, conçues spécifiquement pour le branchement du banc.

Un banc comporte généralement, d'un part, un circuit de fluide muni d'un réservoir de fluide et d'une pompe à débit variable et à pression constante et d'autre part, un moteur à vitesse constante (asynchrone) pour entraîner la pompe par l'intermédiaire d'un arbre. La pompe fournit ainsi une pression constante dans une gamme de débit donnée, le débit pouvant varier par l'intermédiaire du pilotage, généralement par un système fluido-mécanique interne à la pompe, de la cylindrée variable de la pompe. L'adaptation de la pression en sortie de la pompe s'effectue donc par l'adaptation automatique du débit de la pompe.

La pression de fonctionnement des différents circuits de l'aéronef est variable selon le type d'aéronef.

Le banc est donc dimensionné en fonction de la nature de l'aéronef auquel il est destiné pour assurer un fonctionnement à la pression considérée.

En pratique, on détermine le débit de fluide utile pour assurer le bon fonctionnement des différents systèmes concernés de l'aéronef. On définit alors les caractéristiques du moteur qui permettent de fournir la puissance et le débit utiles. La pompe est alors choisie en fonction de la pression de fonctionnement des circuits fluidiques de l'aéronef alimentant lesdits systèmes. La pompe est également choisie de sorte que le débit maximal qu'elle pourrait théoriquement fournir, à vitesse donnée et cylindrée maximale de la pompe, soit supérieur ou égal au débit utile que peut effectivement délivrer la pompe, compte tenu du dimensionnement du moteur.

La pression de fonctionnement des circuits fluidiques d'un aéronef a beaucoup augmenté ces dernières années. Par exemple, pour un avion commercial, la pression de fonctionnement de ces différents circuits a tendance à augmenter de 210 bars à 350 bars aujourd'hui pour les gros porteurs tels que l'A380.

Dans le même temps, le débit utile pour alimenter ces circuits n'a pas sensiblement évolué.

En conséquence, la puissance nécessaire pour alimenter les circuits fluidiques concernés de l'aéronef a beaucoup augmenté ces dernières années.

Les bancs utilisés en phase de maintenance ont donc du évoluer pour compenser cette élévation de puissance, nécessaire à l'obtention et au maintien des niveaux de pression désormais requis sur l'aéronef.

Ceci implique plusieurs inconvénients.

Les bancs actuels consomment beaucoup plus de puissance qu'auparavant.

En effet, le moteur fournit constamment une puissance électrique qui doit être au moins égale à la puissance nécessaire au bon fonctionnement des systèmes concernés de l'aéronef. En augmentant les pressions de fonctionnement, on augmente donc en conséquence la puissance électrique consommée par le moteur.

Par ailleurs, les bancs actuels doivent fournir un couple moteur plus important et/ou une vitesse de rotation plus élevée pour fournir le surcroît de puissance lié à l'augmentation des pressions de fonctionnement des systèmes concernés de l'aéronef.

Ceci se traduit généralement par des bancs plus volumineux et plus coûteux.

Ceci se traduit également par une augmentation du bruit généré par les bancs actuels.

En particulier, il convient de noter que l'augmentation du bruit est principalement liée au fait que la pompe doit maintenir un niveau de pression plus important.

Par ailleurs, du fait que le moteur tourne à vitesse constante, ce bruit est généré constamment, alors que l'opérateur de maintenance n'a besoin de la puissance fournie par le moteur du banc uniquement lorsqu'il actionne l'un des systèmes concernés de l'aéronef.

Un objectif de l'invention est de pallier l'un au moins des inconvénients précités.

A cet effet, l'invention propose un banc d'alimentation en fluide, par exemple pour un aéronef en phase de maintenance, ledit banc comprenant :

- un circuit fluidique comportant une pompe à débit variable et pression constante, ledit circuit étant destiné à être connecté à un autre circuit fluidique à alimenter en fluide ;
- un moteur pour entraîner la pompe,

caractérisé en ce que le moteur étant un moteur à vitesse variable, le banc comprend un débitmètre pour mesurer le débit de fluide susceptible d'être transmis au circuit à alimenter en fluide et des moyens pour contrôler la vitesse de rotation du moteur en fonction de ce débit de fluide.

Le banc pourra également présenter l'une au moins des caractéristiques suivantes, prise seule ou en combinaison :

- le débitmètre est disposé entre la sortie de la pompe et une prise du banc avec ledit un autre circuit fluidique, de préférence à proximité de cette prise ;
- les moyens pour contrôler la vitesse de fonctionnement du moteur comprennent un moyen de calcul pour déterminer une vitesse de consigne du moteur à laquelle il doit fonctionner et, un variateur de vitesse, connecté au moyen de calcul, pour adapter la vitesse de rotation du moteur à la vitesse de consigne déterminée par le moyen de calcul ;
- les moyens pour contrôler la vitesse de fonctionnement du moteur contrôlent également l'accélération et/ou la décélération du moteur ;
- le banc comprend un capteur de pression après la sortie de la pompe ;
- le capteur de pression est connecté à une commande de pression pour la pompe afin que cette dernière ajuste une pression de consigne en sortie de pompe ;
- le capteur de pression est connecté aux moyens pour contrôler la vitesse de rotation du moteur, de sorte que la vitesse de rotation du moteur soit également contrôlée en fonction de la valeur de pression mesurée par ce capteur ;
- le moteur est apte à délivrer une puissance maximale qui est sensiblement égale à la puissance nécessaire au fonctionnement nominal d'un ou de plusieurs système(s) prévu(s) sur le circuit de fluide alimenté par le banc.

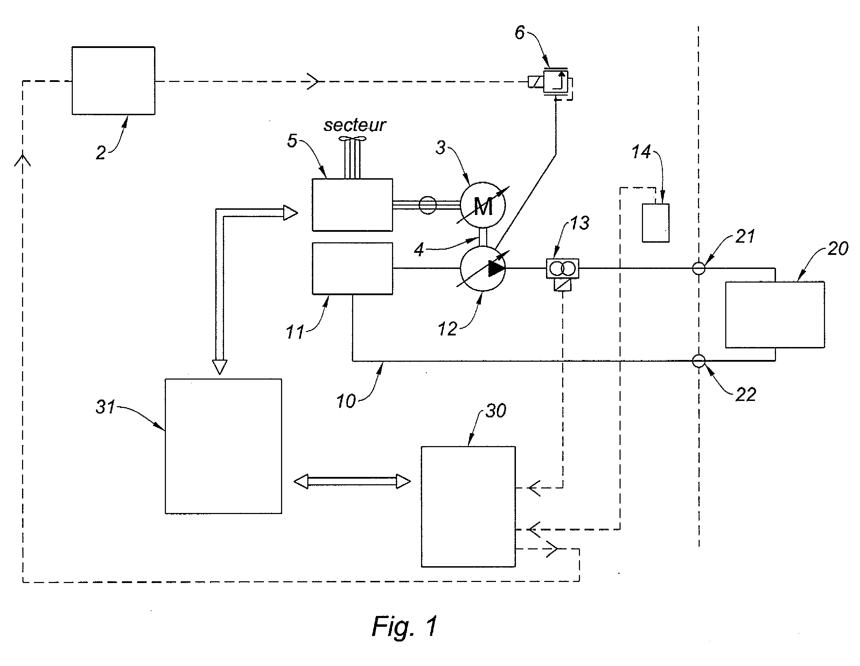

L'invention sera mieux comprise et d'autres buts, avantages et caractéristiques de celle-ci apparaîtront plus clairement à la lecture de la description qui suit et qui est faite au regard de la figure 1 annexée, laquelle représente un schéma fonctionnel d'un banc conforme à l'invention.

La description du banc selon l'invention qui suit est effectuée dans le cadre de son utilisation pour un aéronef.

Le banc 1 comprend un circuit de fluide 10 muni d'un réservoir de fluide 11 et d'une pompe 12 à débit variable et à pression constante. Le circuit de fluide 10 est connecté à l'aéronef par l'intermédiaire de prises de coques 21, 22 à un circuit de fluide 20 de l'aéronef.

La pompe 12 fournit une pression constante dans une gamme de débit prédéterminée. La valeur du débit fourni par cette pompe 12 est variable dans la gamme de débit prédéterminée, généralement par l'intermédiaire d'un système fluido-mécanique interne à la pompe (non représenté).

Le circuit de fluide 10 comprend un capteur de pression 14 pour mesurer la pression fournie par la pompe 12. Ce capteur 14 de pression est disposé entre la sortie de la pompe 12 et la prise de coque 21 de l'aéronef, et avantageusement à proximité de cette prise de coque 21 afin de mesurer au mieux la pression en entrée du circuit fluidique 20.

Dans le cadre de l'invention, le capteur de pression 14 est avantageusement connecté à une commande 2 de pression de sortie de la pompe, destinée à agir sur une soupape 6 de réglage de cette pression.

Cela permet de vérifier que la pression fournie par la pompe 12 correspond bien à une pression de consigne demandée par l'opérateur de maintenance et le cas échéant, d'agir sur la pompe 12 pour que cette dernière ajuste la pression fournie par la pompe 12.

On pourrait cependant ne pas utiliser les mesures fournies par le capteur de pression 14 pour ajuster la pression de sortie de la pompe 12, par l'intermédiaire de la soupape de réglage 6.

En effet, le système fluido-mécanique interne à la pompe est normalement suffisant pour maintenir la pression de sortie de la pompe 12 à la pression de consigne, par adaptation automatique de sa cylindrée. La soupape de réglage 6 améliore cependant le réglage de cette pression.

Il convient par ailleurs de noter qu'un moyen de conditionnement de signaux 30 est prévu entre le capteur 14 de pression et le moyen de commande 2. Ce moyen de conditionnement de signaux 30 permet une mise en forme d'un signal physique, en l'occurrence une pression, en un signal électrique utilisable le moyen de commande 2.

La commande 2 sera généralement une commande électrique.

Le circuit 10 comprend également un débitmètre 13, qui permet de mesurer le débit de fluide fourni au circuit 20 de l'aéronef. Ce débitmètre 13 est disposé entre la sortie de la pompe 12 et la prise de coque 21 de l'aéronef, avantageusement à proximité de cette prise de coque 21 pour que le débit mesuré corresponde au mieux au débit de fluide effectivement transmis au circuit fluidique 20 de l'aéronef.

Par ailleurs, le banc 1 comprend un moteur à vitesse variable 3 pour entraîner la pompe 12, par l'intermédiaire d'un arbre 4 reliant le moteur 3 à la pompe 12.

Le moteur 3 sera généralement un moteur électrique.

Avantageusement, mais non limitativement, le moteur 3 pourra être dimensionné de sorte que la puissance maximale qu'il peut délivrer est sensiblement égale à la puissance maximale qui est nécessaire au fonctionnement nominal de l'ensemble des systèmes concernés de l'aéronef. Cela permet de limiter la puissance du moteur et donc sa consommation d'énergie.

Par exemple, on peut envisager un moteur 3 dont la puissance maximale est d'environ 150kW, puissance compatible avec une pression de fonctionnement de 350 bars.

Un variateur de vitesse 5 est adjoint au moteur 3 pour faire évoluer la vitesse de rotation de ce dernier, en fonction du débit mesuré par le débitmètre 13.

A cet effet, le banc 1 comporte un moyen de calcul 31, disposé entre le débitmètre 13 et le variateur 5 de la vitesse du moteur pour déterminer la vitesse de fonctionnement que le moteur 3 doit adopter (vitesse de consigne), compte tenu du débit de fluide considéré. Le moyen de calcul 31 comporte par exemple un ou plusieurs processeurs pour effectuer les calculs proprement dits et une mémoire pour stocker au moins une loi de commande reliant le débit de fluide mesuré à la vitesse de consigne.

Avantageusement, les mesures issues du débitmètre 13 sont conditionnées dans le moyen de conditionnement de signaux 30, avant d'être transmises au moyen de calcul 31. Dans le cas d'espèce, le moyen de conditionnement de signaux transforme les mesures de débit en un signal électrique.

Le fonctionnement de ce banc 1 est le suivant.

Le banc 1 est connecté à l'aéronef par l'intermédiaire des prises de coques 21, 22, puis l'opérateur met le banc 1 en fonctionnement.

Le moteur 3 tourne alors à une vitesse de fonctionnement, dite vitesse talon, qui est généralement égale ou légèrement supérieure à la vitesse minimum en dessous de laquelle le constructeur de la pompe 12 recommande de ne pas descendre, pour éviter tout dysfonctionnement de la pompe.

Ce fonctionnement à faible vitesse permet de réduire les bruits qui sont principalement générés par la pompe 12.

C'est en particulier le cas par rapport à un banc utilisant un moteur à vitesse constante, dans la mesure où ce type de moteur présente une vitesse de fonctionnement, généralement entre 1500 tours/mn et 1800 tours/mn, qui est nettement supérieure à la vitesse talon du moteur 3. En effet, la vitesse talon du moteur 3 sera d'environ 500 tours/mn pour une pression de consigne du circuit 20 de 210 bars.

Ce fonctionnement continue tant que l'opérateur de maintenance ne vérifie aucun des systèmes concernés de l'aéronef.

Lorsque l'opérateur de maintenance souhaite vérifier le bon fonctionnement d'un système de l'aéronef alimenté par le circuit 20 de fluide, un débit de fluide plus important devient nécessaire.

Dans ce cas, et afin de maintenir la pression de consigne dans le circuit 20 de fluide de l'aéronef, la pompe 12 augmente automatiquement le débit de fluide qu'elle peut délivrer à ce circuit 20. Cela se traduit généralement par une augmentation de la cylindrée de la pompe 12.

Dans le même temps, la vitesse du moteur 3 augmente vers une vitesse de consigne, dont la valeur est contrôlée, afin que la pompe 12 puisse délivrer le débit nécessaire au maintien de la pression de consigne. Ce contrôle s'effectue par l'intermédiaire du débitmètre 13, du moyen de calcul 31 et du variateur 5 de la vitesse du moteur 3.

Plus précisément, lorsque l'opérateur de maintenance souhaite tester l'un des systèmes concernés de l'aéronef, le couple délivré par la pompe 12 augmente.

Ceci est lié au fait que le couple de la pompe dépend, au rendement près, du produit entre le différentiel de pression entre son entrée et sa sortie avec sa cylindrée, cette cylindrée dépendant du système fluido-mécanique interne à la pompe 12.

En appliquant les relations de la dynamique newtonienne à l'ensemble formé par le moteur 3, la pompe 12 et l'arbre 4 qui les relie, l'augmentation du couple de la pompe 12 s'accompagne d'une part, d'une augmentation du couple moteur et d'autre part d'une augmentation de la vitesse du moteur. En effet, l'accélération du moteur 3 est alors liée à la différence entre le couple de la pompe 12 et le couple du moteur 3 par la relation suivante :

$$C_{12} - C_3 = J.\,d\Omega/dt \qquad (1)$$

Avec:

$C_{12}$, le couple de la pompe 12
$C_3$, le couple du moteur 3
$J$, le moment d'inertie de l'ensemble arbre 4, moteur 3 et pompe 12, et
$\Omega$, la vitesse de rotation instantanée du moteur 3.

Ainsi, lorsque le couple de la pompe 12 augmente, le couple du moteur 3 a également tendance à augmenter, tout comme la vitesse de rotation du moteur.

La puissance délivrée par le moteur 3 augmente en conséquence. En effet, il convient de rappeler que la puissance instantanée délivrée par le moteur 3 dépend du produit entre la vitesse de rotation instantanée du moteur et le couple du moteur à cette vitesse instantanée.

Le débitmètre 13, le moyen de calcul 31 et le variateur 5 de la vitesse du moteur 3 permettent d'augmenter la puissance délivrée par le moteur 3, tout en contrôlant la vitesse de consigne que le moteur 3 doit adopter pour assurer à la fois un fonctionnement effectif du banc 1 et un fonctionnement nominal du circuit 20 de fluide.

En l'absence de contrôle de la vitesse de consigne, le couple délivré par la pompe 12 risquerait d'augmenter jusqu'à ce que la cylindrée maximale de la pompe 12 soit atteinte.

Une fois la cylindrée maximale de la pompe 12 atteinte, celle-ci fournirait alors, à la vitesse instantanée considérée du moteur 3, un débit insuffisant pour maintenir la pression de consigne dans le circuit 20 de fluide de l'aéronef.

Ce risque est tout particulièrement encouru lorsque le moteur 3 est dimensionné de sorte que la puissance maximale qu'il peut délivrer est sensiblement égale à la puissance maximale qui est nécessaire au fonctionnement nominal de l'ensemble des systèmes concernés de l'aéronef. En effet, le moteur 3 ne dispose alors pas de la réserve de puissance nécessaire à l'augmentation de sa vitesse de fonctionnement.

Le test de fonctionnement du système considéré de l'aéronef ne serait dès lors pas effectué dans les conditions de fonctionnement nominales de l'aéronef.

Par ailleurs, le moteur 3 risquerait de caler.

La loi de commande intégrée au moyen de calcul 31, laquelle fournit la vitesse de consigne du moteur 3 en fonction du débit mesuré par le débitmètre 13, peut prendre différentes formes. Par exemple, on peut exprimer cette loi de commande sous la forme suivante :

$$\Omega_C = a * Q_{mes} + b, \quad \text{si } \Omega_t < \Omega_C < \Omega_{max} \qquad (2)$$

Avec:

$\Omega_c$, la vitesse de rotation de consigne que doit atteindre le moteur 3,
$\Omega_{mes}$, le débit mesuré par le débitmètre 13,
$\Omega_t$, la vitesse talon du moteur 3,
$\Omega_{max}$, la vitesse maximale du moteur 3, et
a, b les coefficients de la droite reliant le débit mesuré à la vitesse de consigne.

Ainsi, la loi de commande fournit une relation entre le débit mesuré et la vitesse de consigne devant être adoptée par le moteur 3. Il convient de noter que la relation (2) s'appuie sur une vitesse maximale $\Omega_{max}$ du moteur 3, qui sera généralement fournie par le constructeur de la pompe 12.

A titre d'exemple, on peut envisager les paramètres suivants : a = 14, b = 420, $\Omega_t$ = 700tr/mn et $\Omega_{max}$ = 2500tr/mn, le débit $\Omega_{mes}$ étant mesuré en l/mn. Ces données sont compatibles avec l'emploi d'un moteur de puissance maximale de 150kW et une pression de consigne de 350 bars.

Un autre aspect qui peut être contrôlé par les moyens 13, 31, 5 précités concerne la variation de la vitesse de rotation du moteur 3.

En effet, en reprenant l'exemple de la loi de commande (2), celle-ci permet d'obtenir la vitesse de consigne en fonction du débit mesuré par le débitmètre 13, mais n'impose pas d'accélération particulière au moteur 3 pour atteindre cette vitesse de consigne.

Le moyen de calcul 31 peut ainsi intégrer une loi spécifique à cet effet et ce, dans l'objectif d'améliorer le fonctionnement du banc 1. Cette loi peut par exemple prendre la forme suivante :

$$\Omega(t+dt) = \Omega(t) + A * dt \qquad (3)$$

Avec:

$\Omega(t)$, la vitesse de rotation instantanée du moteur 3 à l'instant t,
$\Omega(t+dt)$, la vitesse de rotation instantanée du moteur 3 à l'instant t+dt,
dt, un incrément de temps, et
A, une fonction représentative de l'accélération de la vitesse de rotation du moteur 3, laquelle est généralement liée aux caractéristiques intrinsèques du variateur 5 (A peut être une constante).

De manière similaire, le moyen de calcul 31 peut intégrer une loi spécifique pour contrôler la décélération du moteur 3. En effet, lorsque l'opérateur de maintenance a fini de tester l'un des systèmes concernés de l'aéronef, il n'y a plus d'appel de débit et le moteur 3 retourne à la vitesse talon.

Avantageusement, on choisira une accélération plus importante que la décélération.

En effet, lors d'un appel de débit par le circuit 20 de l'aéronef, on comprend qu'il est préférable que le moteur 3 passe de la vitesse talon à la vitesse de consigne rapidement, pour limiter le temps de transition et donc limiter les éventuelles variations de la pression de consigne.

En revanche, lorsque le test d'un des systèmes concernés de l'aéronef est terminé, on aura plutôt tendance à ménager le moteur 3 et la pompe 4 avec une décélération lente.

Il convient par ailleurs de noter que la vitesse minimum de la pompe 12, fournie par le constructeur, dépend de la pression de consigne que le banc 1 doit fournir au circuit 20 de l'aéronef.

Il est ainsi envisageable d'utiliser les signaux issus du capteur de pression 14 pour ajuster au mieux la vitesse talon du moteur 3. Dans ce cas, le moyen de calcul 31 peut être utilisé dans une gamme de pression donnée, par exemple comprise entre 200 bars et 400 bars. Le capteur de pression 14 sert alors non seulement à la commande 2 de pression de la pompe 12 pour maintenir une pression constante, mais également à l'ajustement de la vitesse talon du moteur 3.

Cette solution est la plus avantageuse car l'opérateur de maintenance peut utiliser le banc 1 avec une pression de consigne différente, sans avoir à modifier lui-même la vitesse talon du moteur.

Plus simplement, on pourrait cependant prérégler la vitesse talon du moteur pour une pompe donnée visant à opérer à une pression de consigne donnée.

Il convient par ailleurs de noter que, dans certains cas, il peut être utile de connecter le capteur de pression 14 aux moyens 5, 31 pour contrôler la vitesse de rotation du moteur, par l'intermédiaire du moyen de conditionnement des signaux.

En effet, la mesure de pression effectuée par le capteur 14 peut être utilisée pour régler la vitesse de rotation du moteur, en complément de la mesure de débit de fluide effectuée le débitmètre 13.

Enfin, le banc 1 selon l'invention peut être utilisé pour des applications autres que celles concernant le test de systèmes alimentés en fluide dans un aéronef.

## Revendications

1. Banc (1) d'alimentation en fluide, par exemple pour un aéronef en phase de maintenance, ledit banc comprenant :

   - un circuit fluidique (10) comportant une pompe (12) à débit variable et pression constante, ledit circuit (10) étant destiné à être connecté à un autre circuit fluidique (20) à alimenter en fluide ;
   - un moteur (3) pour entraîner la pompe (12),

   **caractérisé en ce que** le moteur (3) étant un moteur à vitesse variable, le banc comprend un débitmètre (12) pour mesurer le débit de fluide susceptible d'être transmis au circuit (20) à alimenter en fluide et des moyens (31, 5) pour contrôler la vitesse de rotation du moteur (3) en fonction de ce débit de fluide.

2. Banc selon la revendication 1, dans lequel le débitmètre (13) est disposé entre la sortie de la pompe (12) et une prise (21) du banc avec ledit un autre circuit fluidique (20), de préférence à proximité de cette prise (21).

3. Banc selon l'une des revendications précédentes, dans lequel les moyens (31, 5) pour contrôler la vitesse de fonctionnement du moteur (3) comprennent un moyen de calcul (31) pour déterminer une vitesse de consigne du moteur à laquelle il doit fonctionner et, un variateur (5) de vitesse, connecté au moyen de calcul (31), pour adapter la vitesse de rotation du moteur (3) à la vitesse de consigne déterminée par le moyen de calcul (31).

4. Banc selon la revendication précédente, dans lequel les moyens (31, 5) pour contrôler la vitesse de fonctionnement du moteur (3) contrôlent également l'accélération et/ou la décélération du moteur (3).

5. Banc selon l'une des revendications précédentes, dans lequel il est prévu un capteur de pression (14) après la sortie de la pompe (12).

6. Banc selon la revendication précédente, dans lequel le capteur de pression (14) est connecté à une commande (2) de pression pour la pompe (12) afin que cette dernière ajuste une pression de consigne en sortie de pompe.

7. Banc selon l'une des revendications 5 ou 6, dans lequel le capteur de pression (14) est connecté aux moyens (31, 5) pour contrôler la vitesse de rotation du moteur (3), de sorte que la vitesse de rotation du moteur (3) soit également contrôlée en fonction de la valeur de pression mesurée par ce capteur (14).

8. Banc selon l'une des revendications précédentes, dans lequel le moteur (3) est apte à délivrer une puissance maximale qui est sensiblement égale à la puissance nécessaire au fonctionnement nominal d'un ou de plusieurs système(s) prévu(s) sur le circuit de fluide (20) alimenté par le banc.

**Patentansprüche**

1. Hydraulischer Prüfbank (1), beispielsweise für ein Luftfahrzeug in der Wartungsphase, wobei die Prüfbank umfasst:

   - einen Fluidkreis (10), umfassend eine Pumpe (12) mit variablem Durchfluss und konstantem Druck, wobei der Kreis (10) bestimmt ist, an einen anderen, mit Fluid zu versorgenden Fluidkreis (20) angeschlossen zu sein,
   - einen Motor (3), um die Pumpe (12) abzutreiben,

   dadurch gekennzeichet, dass, wobei der Motor (3) ein Motor mit variabler Geschwindigkeit ist, die Prüfbank einen Durchflussmesser (12) zum Messen des Fluiddurchflusses, der an den mit Fluid zu versorgenden Kreis (20) übertragen werden könnte, und Kontrollmittel (31, 5) der Rotationsgeschwindigkeit des Motors (3) in Abhängigkeit von diesem Fluiddurchluss umfasst.

2. Prüfbank nach Anspruch 1, wobei der Durchflussmesser (13) zwischen dem Ausgang der Pumpe (12) und einem Angriff (21) der Pzüfbank mit dem anderen Fluidkreis (20), vorzugsweise in der Nähe dieses Abgriffs (21), angeordnet ist.

3. Prüfbank nach einem der vorangehenden Ansprüche, wobei die Kontrollmittel (31, 5) der Betriebsgeschwindigkeit des Motors (3) ein Rechenmittel (31) zur Bestimmung einer Referenzgeschwindigkeit des Motors, mit welcher er funktionieren muss, und einen mit dem Rechenmittel (31) verbundenen Geschwindigkeitsvariator (5), um die Rotationsgeschwindigkeit des Motors (3) mit der von dem Rechenmittel (31) bestimmten Referenzgeschwindigkeit zu vergleichen, umfassen.

4. Prüfbank nach vorangehendem Anspruch, wobei die Kontrollmittel (31, 5) der Betriebsgeschwindigkeit des Motors (3) ebenfalls die Beschleunigung und/oder die Entschleunigung des Motors (3) kontrollieren.

5. Prüfbank nach einem der vorangehende Ansprüche, wobei ein Drucksensor (14) nach dem Ausgang der Pumpe (12) vorgegehen ist.

6. Prüfbank nach vorangehendem Anspruch, wobei der Drucksensor (14) an eine Drucksteuerung (2) für die Pumpe (12) angeschlossen ist, damit diese einen Referenzdruck am Ausgang der Pumpe einstellt.

7. Prüfbank nach einem der Ansprüche 5 oder 6, wobei der Drucksensor (14) an die Kontrollmittel (31, 5) der Rotationsgeschwindigkeit des Motors (3) abgeschlossen ist, so dass die Rotationsgeschwindigkeit des Motors (3) ebenfalls in Abhängigkeit von dem von diesem Sensor (14) gemessenen Druckwert kontrolliert wind.

8. Prüfbank nach einem der vorangehende Ansprüche, wobei der Motor (3) imstande ist, eine maximale Leistung zu liefern, die etwa der Leistung entspricht, die für den Nominalbetrieb eines Systems oder mehrerer Systeme notwendig ist, die auf dem von der Prüfbank versorgten Fluidkreis (20) vorgesehen sind.

**Claims**

1. A fluid supply bench (1), for example for an aircraft in maintenance phase, said bench comprising:

   - a fluidic circuit (10) including a variable flow rate and constant pressure pump (12), said circuit (10) being intended to be connected to another fluidic circuit (20) to be supplied with fluid,

- a motor (3) to drive the pump (12),

**characterized in that** the motor (3) being a variable speed motor, the bench comprises a flow meter (12) to measure the flow rate of fluid that may be transmitted to the circuit (20) to be supplied with fluid and means (31, 5) for controlling the rotation speed of the motor (3) as a function of this fluid flow rate.

2. The bench according to claim 1, wherein the flow meter (13) is positioned between the outlet of the pump (12) and a connection (21) of the bench with said other fluidic circuit (20), preferably near this connection (21).

3. The bench according to one of the preceding claims, wherein the means (31, 5) for controlling the operating speed of the motor (3) comprise computing means (31) for determining a setpoint speed of the motor at which it must operate, and a speed regulator (5), connected to the computing means (31), to adapt the speed of rotation of the motor (3) to the setpoint speed determined by the computing means (31).

4. The bench according to the preceding claim, wherein the means (31, 5) for controlling the operating speed of the motor (3) also control the acceleration and/or deceleration of the motor (3).

5. The bench according to one of the preceding claims, wherein a pressure sensor (14) is provided after the outlet of the pump (12).

6. The bench according to the preceding claim, wherein the pressure sensor (14) is connected to a pressure control (2) for the pump (12) so that the latter adjusts a setpoint pressure at the pump outlet.

7. The bench according to one of claims 5 or 6, wherein the pressure sensor (14) is connected to the means (31, 5) for controlling the rotation speed of the motor (3), such that the rotation speed of the motor (3) is also controlled as a function of the pressure value measured by this sensor (14).

8. The bench according to one of the preceding claims, wherein the motor (3) is able to deliver a maximum power that is substantially equal to the power necessary for the nominal operation of one or more systems provided on the fluid circuit (20) supplied by the bench.

Fig. 1